Europäisches Patentamt

European Patent Office (11) Veröffentlichungsnummer : **0 102 587**

Office européen des brevets **B1**

(12) EUROPÄISCHE PATENTSCHRIFT

(45) Veröffentlichungstag der Patentschrift :
02.01.86

(51) Int. Cl.⁴ : **C 02 F 5/04, C 23 F 11/18**

(21) Anmeldenummer : **83108320.9**

(22) Anmeldetag : **24.08.83**

(54) Verfahren zur Korrosionsschutzbehandlung wasserführender Systeme.

(30) Priorität : 02.09.82 DE 3232615

(43) Veröffentlichungstag der Anmeldung :
14.03.84 Patentblatt 84/11

(45) Bekanntmachung des Hinweises auf die Patenterteilung : 02.01.86 Patentblatt 86/01

(84) Benannte Vertragsstaaten :
AT CH DE FR GB LI NL

(56) Entgegenhaltungen :
DD-A- 59 668
US-A- 1 278 435
US-A- 3 304 267

(73) Patentinhaber : **Henkel Kommanditgesellschaft auf Aktien**
**Postfach 1100 Henkelstrasse 67**
**D-4000 Düsseldorf-Holthausen (DE)**

**METAKORIN GmbH**
**Ernst-Reuter-Strasse 18-20**
**D-5060 Bergisch Gladbach 1 (DE)**

(72) Erfinder : **Wons, Werner**
**Bachstrasse 44**
**D-5000 Köln 80 (DE)**
Erfinder : **Wehle, Volker, Dr.**
**Carl-Orff-Strasse 3**
**D-4010 Hilden (DE)**

EP 0 102 587 B1

Jouve, 18, rue St-Denis, 75001 Paris, France

**Beschreibung**

Der Gegenstand der Erfindung betrifft ein Verfahren zur Korrosionsschutzbehandlung von wasserführenden Systemen, insbesondere Durchflußsystemen aus niedrig legiertem oder unlegiertem Stahl.

Im wasserführenden Systemen finden chemische Wechselwirkungen zwischen dem Wasser und den Werkstoffen des Systems statt. Die Größe dieser Wechselwirkung hängt im wesentlichen ab von der Wasserqualität (Wasseranalyse), vom verwendeten Werkstoff und von den Betriebsbedingungen.

Diese Wechselwirkungen führen im allgemeinen zu Veränderungen des Werkstoffes (Korrosionen) und zu Beeinträchtigungen des Wassers durch die Korrosionsprodukte. Übermäßige Korrosionen zerstören das wasserführende System und können erhebliche Folgeschäden (Produktionsausfälle, Versorgungsausfälle, Folgeschäden an Anlagen und Gebäuden) hervorrufen.

Aus den genannten Gründen ist die Behandlung des Wassers zum Zwecke des Korrosionsschutzes in vielen wasserführenden Systemen eine zwingende Notwendigkeit.

Während die Korrosionsschutzbehandlung von im Kreislauf geführten Wässern (offene und geschlossene Kühlkreisläufe) mit modernen Korrosionsinhibitoren auf Basis von Zinksalzen in Kombination mit Phosphonsäuren, Polycarbonsäuren oder Molybdaten zum Stand der Technik gehört, ist die Behandlung von Durchflußsustemen noch nicht optimal gelöst.

So erfordern beispielsweise die oben genannten Inhibitoren Konzentrationen im Wasser, die aus Kostengründen nicht realisierbar sind.

Weiterhin führen die Durchflußsysteme aufgrund des höheren Wasserbedarfs zu einer stärkeren Belastung des Vorfluters, so daß die genannten Inhibitoren aus ökologischen Gründen nicht akzeptiert werden können.

Auch sind häufig die genannten Systeme für die Trinkwasserversorgung vorgesehen, so daß die obigen Inhibitoren, da nicht vom Lebensmittelgesetzt zugelassen, nicht eingesetzt werden dürfen.

Gegenstand der Erfindung ist somit ein Verfahren zur Korrosionsschutzbehandlung wasserführender Systeme mit weichem, schwach gepuffertem Wasser durch Zusätze von Phosphaten und/oder Silikaten. Das Verfahren ist dadurch gekennzeichnet, daß dem Wasser Natrium- oder Kaliumcarbonate oder Hydrogencarbonate in Kombination mit Phosphaten und/oder Silikaten zugegeben werden und dies in Mengen von 2 bis 20 g/m³ berechnet als $CO_3$, beziehungsweise 0,5 bis 5 g/m³ berechnet als $P_2O_5$ sowie 1 bis 20 g/m³ berechnet als $SiO_2$ erfolgt.

Vorzugsweise ist das Verfahren dadurch gekennzeichnet, daß die zur Anwendung kommenden Carbonate oder Hydrogencarbonate dem Wasser in Mengen von 5 bis 10 g/m³ berechnet als $CO_3$ zugegeben werden.

Im einzelnen kommen dabei Zusätze von Natriumcarbonaten, Kaliumcarbonaten oder Hydrogencarbonaten ($NaHCO_3$) in Betracht.

Als Phosphate kommen Orthophosphate, Polyphosphate oder Gemische hiervon, wie insbesondere Trinatriumorthophosphat und Natriumtripolyphosphat sowie Hexametaphosphat in Betracht. Vorzugsweise werden die genannten Verbindungen in Mengen von 1 bis 3 g/m³, berechnet als $P_2O_5$, zugegeben.

Die Zugabe an Silikaten, wie Natrium- oder Kaliumsilikat, erfolgt vorzugsweise in Mengen von 2 bis 8 g/m³, berechnet als $SiO_2$. Das Molverhältnis $SiO_2 : Na_2O$ der verwendeten Silikate kann im Bereich von 2 bis 3,5 : 1 liegen, vorzugsweise wird Natriumsilikat mit einem Molverhältnis von 3,3 bis 2,7 verwendet.

Die oben beschriebene Korrosionsschutzbehandlung ist vorzugsweise für die Behandlung von weichem, schwach gepuffertem Wasser geeignet, welches im pH-Bereich von 6,5 bis 8,5, vorzugsweise 6,8 bis 8,0, liegt und eine Wasserhärte von bis zu 6 °d (Gesamthärte) und bis zu 3 °d (Carbonathärte) aufweist.

### Beispiel

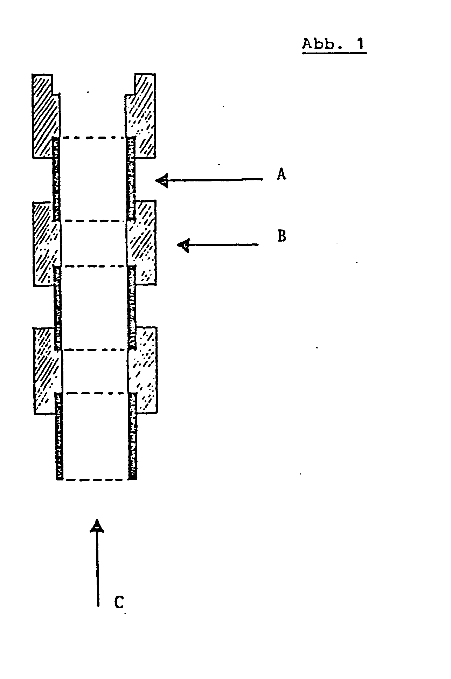

Die Versuche werden nach der Ringsäulenmethode durchgeführt. Hierbei durchströmt das Versuchswasser kontinuierlich eine Säule aus kleinen, circa 2 cm hohen Rohrabschnitten, wobei die einzelnen Segmente durch isolierende Kunststoffringe voneinander getrennt sind (siehe Abb. 1, darin bedeuten : A = Stahlrohrsegment, B = Kunststoffring C = Fließrichtung des Wassers). Die Segmente werden aus handelsüblichem Rohr (Durchmesser 3/4 Zoll) hergestellt, entfettet und gewogen. Nach bestimmten, vorher festgelegten Zeitabständen werden die Ringe ausgebaut und nach Beizung mit inhibierter Säure der Massenverlust durch Rückwiegen bestimmt. Aus der bekannten Oberfläche der Ringe läßt sich die Abtragsrate (Korrosionsrate) errechnen.

Die Ringsäule wird mit circa 0,64 bis 0,68 m/sec. entsprechend 800 bis 850 l/h Wasser der folgenden analytischen Zusammensetzung durchströmt :

| | |
|---|---|
| pH | 8,0 bis 7,8 |
| Gesamthärte | 2,2 bis 3,4 °d |
| Carbonathärte | 1,1 bis 2,5 °d |
| Chlorionen | 14 bis 30 mg/l |

Es werden drei Ringsäulen parallel betrieben, wobei eine ohne jede Dosierung verblieb (Blindwert), eine zweite mit einer handelsüglichen Phosphat-Silikat-Kombination und die dritte mit einem erfindungsgemäßen Mittel dosiert wurden.

Die Versuchsdauer betrug 1,5 Jahre.

Die handelsübliche Phosphat-Silikat-Kombination wird dem Vergleichswasser in solchen Mengen zugegeben, daß im Wasser ein Gehalt von 4 ppm Trinatriumphosphat (ausgedrückt in mg/l $P_2O_5$) und 5,5 ppm Natriumsilikat (ausgedrückt in mg/l $SiO_2$) analytisch nachweisbar sind. Das erfindungsgemäße Mittel wurde dem Versuchswasser in solchen Mengen zugegeben, daß im Wasser ein Gehalt von 3 ppm Trinatriumphosphat (ausgedrückt in mg/l $P_2O_5$), 5 ppm Natriumsilikkat (ausgedrückt in mg/l $SiO_2$) und 7,5 ppm Natriumhydrogencarbonat (ausgedrückt in mg/l $CO_3^{--}$) vorlag.

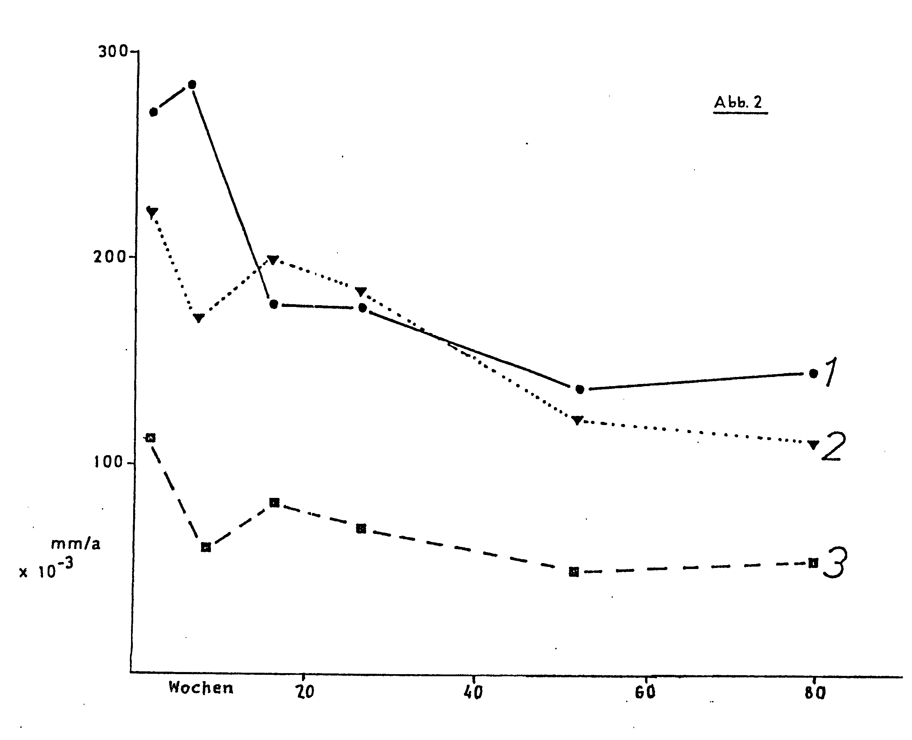

Die Ergebnisse sind in Abb. 2 (Kurven 1 bis 3) und in der Tabelle dargestellt.

Die Überlegenheit des erfindungsgemäßen Mittels gegenüber der klassischen Verfahrensweise ist ersichtlich.

Tabelle

Korrosionsraten

| Wochen | Blindwert (Kurve 1) $mm/a \times 10^{-3}$ | Phosphat/Silikat (Kurve 2) $mm/a \times 10^{-3}$ | Phosphat/Silikat/ Carbonat (Kurve 3) $mm/a \times 10^{-3}$ |
|---|---|---|---|
| 2 | 270 | 221 | 112 |
| 8 | 285 | 170 | 60 |
| 16 | 178 | 200 | 80 |
| 32 | 178 | 183 | 68 |
| 52 | 138 | 121 | 49 |
| 78 | 145 | 111 | 55 |

## Patentansprüche

1. Verfahren zur Korrosionsschutzbehandlung wasserführender Systeme mit weichem, schwach gepuffertem Wasser durch Zusätze von Phosphaten und/oder Silikaten, dadurch gekennzeichnet, daß dem Wasser Natrium- oder Kaliumcarbonate oder Hydrogencarbonate in Kombination mit Phosphaten und/oder Silikaten zugegeben werden und dies in Mengen von 2 bis 20 g/m$^3$ berechnet als $CO_3^{--}$, beziehungsweise 0,5 bis 5 g/m$^3$ berechnet als $P_2O_5$ sowie 1 bis 20 g/m$^3$ berechnet als $SiO_2$ erfolgt.

2. Verfahren nach Anspruch 1, dadurch gekennzeichnet, daß die zur Anwendung kommenden Carbonate- oder Hydrogen-carbonate dem Wasser in Mengen von 5 bis 10 g/m$^3$ berechnet als $CO_3^{--}$ zugegeben werden.

3. Verfahren nach Anspruch 1 bis 2, dadurch gekennzeichnet, daß die zur Anwendung kommenden Orthophosphate, Polyphosphate oder Gemische hiervon dem Wasser in Mengen von 1 bis 3 g/m$^3$ berechnet als $P_2O_5$ zugegeben werden.

4. Verfahren nach Anspruch 1 bis 3, dadurch gekennzeichnet, daß die zur Anwendung kommenden Silikate als Alkalisilikate dem Wasser in Mengen von 2 bis 8 g/m$^3$ berechnet als $SiO_2$ zugegeben werden.

5. Verfahren nach Anspruch 1 bis 4, dadurch gekennzeichnet, daß die zu behandelnden wasserführenden Systeme Durchflußsysteme sind.

## Claims

1. A process for the corrosion-inhibiting treatment of water-carrying systems for soft, weakly buffered water by additions of phosphates and/or silicates, characterized in that sodium or potassium carbonates or hydrogen carbonates are added to the water in combination with phosphates and/or silicates in respective quantities of from 2 to 20 g/m$^3$ expressed as $CO_3^{--}$, 0.5 to 5 g/m$^3$ expressed as $P_2O_5$ and 1 to 20 g/m$^3$ expressed as $SiO_2$.

2. A process as claimed in Claim 1, characterized in that the carbonates or hydrogen carbonates used are added to the water in quantities of from 5 to 10 g/m$^3$ expressed as $CO_3^{--}$.

3. A process as claimed in Claims 1 and 2, characterized in that the orthophosphates, polyphosphates or mixtures used are added to the water in quantities of from 1 to 3 g/m$^3$ expressed as $P_2O_5$.

4. A process as claimed in Claims 1 to 3, characterized in that the silicates used are added to the water as alkali silicates in quantities of from 2 to 8 g/m$^3$ expressed as $SiO_2$.

5. A process as claimed in Claims 1 to 4, characterized in that the water-carrying systems to be treated are pipeline systems.

**Revendications**

1. Procédé pour protéger de la corrosion des systèmes à circulation d'eau, avec de l'eau douce faiblement tamponnée par des additions de phosphates et/ou de silicates, procédé caractérisé en ce que des carbonates de sodium ou de potassium, ou bien des carbonates d'acides, sont ajoutés à l'eau en combinaison avec des phosphates et/ou des silicates, et ceci en des quantités calculées en $CO_3$ de 2 à 20 g/m$^3$, éventuellement des quantités calculées en $P_2O_5$ de 0,5 à 5 g/m$^3$ ainsi qu'en des quantités calculées en $SiO_2$ de 1 à 20 g/m$^3$.

2. Procédé selon la revendication 1, caractérisé en ce que les carbonates ou les carbonates d'acides utilisés sont ajoutés à l'eau en quantités allant de 5 à 10 g/m$^3$, calculées en $CO_3$.

3. Procédé selon les revendications 1 et 2, caractérisé en ce que les orthophosphates, les polyphosphates ou bien les mélanges de ces phosphates utilisés, sont ajoutés à l'eau en quantités allant de 1 à 3 g/m$^3$ calculées en $P_2O_5$.

4. Procédé selon les revendications 1 à 3, caractérisé en ce que les silicates utilisés sous forme de silicates alcalins sont ajoutés à l'eau en quantités de 2 à 8 g/m$^3$ calculées en $SiO_2$.

5. Procédé selon les revendications 1 à 4, caractérisé en ce que les systèmes à circulation d'eau soumis au traitement, sont des systèmes à circulation d'eau ouverte.

Abb. 1

A

B

C

Abb. 2

Wochen

mm/a
x 10⁻³

1
2
3